# EUROPÄISCHE PATENTANMELDUNG

(11) **EP 4 810 405 A1**
(43) Veröffentlichungstag der Anmeldung: **23.09.2026**
(21) Anmeldenummer: 25164677.4
(22) Anmeldetag: 19.03.2025
(51) Int. Cl.: B65D 88/74, F25D 3/06, F25D 11/00, F25D 17/02, F25D 19/00, F25D 19/02

(54) **TRANSPORTBEHÄLTER**

(71) Anmelder: REP IP AG, 6300 Zug (CH)
(72) Erfinder: Ros, Nico, 4052 Basel (CH); Christian, Ardüser, 8640 Rapperswil (CH); Patrick, Fässler, 6300 Zug (CH); Stefan, Retzko, 8037 Zürich (CH)
(74) Vertreter: SONN Patentanwälte GmbH & Co KG

(57) **Zusammenfassung**

Transportbehälter (1) zum Transport von temperaturempfindlichem Transportgut aufweisend einen Innenraum zur Aufnahme des Transportguts, eine den Innenraum umschließende mehrschichtige Hülle, die eine Wärmedämmung (8) umfasst, und eine Kühlvorrichtung zur Kühlung des Innenraums mit einem Verteilsystem für ein Kühlmedium, wobei die Kühlvorrichtung zwei Kühlsysteme aufweist, nämlich ein erstes Kühlsystem und ein zweites Kühlsystem, wobei jedes Kühlsystem eine Kompressionskältemaschine aufweist, sodass der Innenraum wahlweise entweder von dem ersten oder dem zweiten Kühlsystem kühlbar ist, und wobei eine Steuerung zur Ansteuerung der Kühlaggregate vorgesehen und dazu eingerichtet ist, bei maximaler Kühlanforderung beide Kühlsysteme gleichzeitig zu betreiben.

## Beschreibung

Die Erfindung betrifft einen Transportbehälter aufweisend einen Innenraum zur Aufnahme des Transportguts, eine den Innenraum umschließende mehrschichtige Hülle, die eine Wärmedämmung und vorzugsweise wenigstens eine Latentwärmespeicherschicht umfasst, und ein Kühlsystem zur Kühlung des Innenraums mit einem Verteilsystem für ein Kühlmedium, das vorzugsweise mit der Latentwärmespeicherschicht thermisch gekoppelt ist.

Solche Transportbehälter dienen dem Transport von temperaturempfindlichem Transportgut, wie beispielsweise Arzneimitteln, Blutprodukten, temperaturempfindlichen Chemikalien oder biologischen Proben, bei dem eine vorgegebene Temperatur über einen längeren Zeitraum präzise eingehalten werden muss.

Beim Transport von temperaturempfindlichem Transportgut, insbesondere von Arzneimitteln, müssen vorgegebene Temperaturbereiche, beispielsweise von 2°C bis 8°C, über Zeiträume von mehreren Stunden oder Tagen strikt eingehalten werden, um die Verwendbarkeit und die Sicherheit des Transportguts zu gewährleisten. Dies stellt insbesondere dann eine große Herausforderung dar, wenn sich die Umgebungstemperatur während des Transports stark ändert oder wenn der Transport über mehrere Tage erfolgt.

Zur Lösung dieser Aufgabe sind aus dem Stand der Technik verschiedene Transportbehälter bekannt. Diese Behälter weisen typischerweise eine Wärmedämmung auf und sind mit aktiven und/oder passiven Kühlelementen ausgestattet. Als passive Kühlelemente werden häufig Latentwärmespeicher eingesetzt, die ein Phasenwechselmaterial (PCM) enthalten. Diese Materialien können durch ihren Phasenwechsel große Mengen an Wärme aufnehmen oder abgeben und so zur Temperierung des Innenraums beitragen.

Als aktive Kühlelemente für Transportbehälter werden beispielsweise Kompressionskältemaschinen eingesetzt, bei denen ein Kältemittel in einem geschlossenen Kreislauf zirkuliert und durch Verdampfen dem zu kühlenden Bereich Wärme entzieht. Eine andere Möglichkeit stellen thermoelektrische Kühlelemente dar, sogenannte Peltier-Elemente, die bei Anlegen einer elektrischen Spannung einen Wärmetransport von einer kalten zu einer warmen Seite bewirken. Diese Systeme haben den Vorteil, dass sie keine beweglichen Teile aufweisen, sind jedoch in ihrer Kühlleistung begrenzt und weisen einen vergleichsweise schlechten Wirkungsgrad auf. Des Weiteren sind Absorptionskältemaschinen bekannt, die thermische Energie zum Antrieb des Kältekreislaufs nutzen.

Aus der EP 3128268 A1 ist ein Transportbehälter bekannt, der eine mehrschichtige Hülle mit einer Wärmedämmung und einer Latentwärmespeicherschicht aufweist. Die Latentwärmespeicherschicht enthält ein Phasenwechselmaterial (PCM), das zum Temperieren des Innenraums dient. In die Latentwärmespeicherschicht sind Kühl- oder Heizschlangen integriert, die von einem Kühl- oder Heizmedium durchströmt werden. Das Medium wird mittels eines aktiven Aggregats gekühlt bzw. erwärmt. Die Wärmedämmung ist als Vakuumdämmung ausgebildet, um eine möglichst gute Isolierung zu erreichen.

Ein Problem des beschriebenen Standes der Technik liegt in der eingeschränkten Zuverlässigkeit und Anpassungsfähigkeit des Kühlsystems. Das System sieht ein einziges aktives Kühlaggregat vor, sodass ein Ausfall dieses Elements die gesamte Temperaturregelung gefährden würde, was bei temperaturempfindlichem Transportgut schwerwiegende Folgen haben kann. Ferner ist das Kühlaggregat typischerweise so dimensioniert, dass es auch die höchstmöglichen Kühlanforderungen, etwa bei extremen Außentemperaturen, bewältigen kann. In typischen Betriebsszenarien, in denen nur eine moderate Kühlung erforderlich ist, führt dies jedoch zu einem ineffizienten Betrieb, da das Aggregat häufig zwischen Ein- und Ausschaltphasen wechselt, um eine Überkühlung zu vermeiden. Dieser wechselnde Betrieb erhöht den Energieverbrauch.

Vor diesem Hintergrund liegt der vorliegenden Erfindung die Aufgabe zugrunde, einen verbesserten Transportbehälter bereitzustellen, der eine erhöhte Betriebssicherheit und Flexibilität bei der Temperaturregelung gewährleistet. Insbesondere soll die Erfindung das Risiko eines Systemausfalls minimieren und eine effiziente Anpassung an unterschiedliche Kühlanforderungen ermöglichen.

Zur Lösung dieser Aufgabe sieht die Erfindung bei einem Transportbehälter der eingangs genannten Art im Wesentlichen vor, dass die Kühlvorrichtung zwei Kühlsysteme aufweist, nämlich ein erstes Kühlsystem und ein zweites Kühlsystem, wobei jedes Kühlsystem eine Kompressionskältemaschine aufweist und vorzugsweise thermisch mit der Latentwärmespeicherschicht gekoppelt ist, sodass der Innenraum wahlweise entweder von dem ersten oder dem zweiten Kühlsystem kühlbar ist, und dass eine Steuerung zur Ansteuerung der Kühlaggregate vorgesehen und dazu eingerichtet ist, bei maximaler Kühlanforderung beide Kühlsysteme gleichzeitig zu betreiben.

Die erfindungsgemäße Ausbildung mit zwei separaten Kühlsystemen, die jeweils eine eigene Kompressionskältemaschine umfassen und vorzugsweise thermisch mit der Latentwärmespeicherschicht gekoppelt sind, bietet mehrere Vorteile. Zunächst wird durch die Redundanz der Kühlsysteme eine erhöhte Betriebssicherheit gewährleistet. Sollte eines der Kühlsysteme ausfallen oder in seiner Leistung beeinträchtigt sein, kann das jeweils andere Kühlsystem die Kühlfunktion übernehmen, wodurch die Temperatur des Transportguts auch unter widrigen Umständen im vorgegebenen Bereich gehalten werden kann. Dies ist insbesondere beim Transport von temperaturempfindlichen Arzneimitteln, biologischen Proben oder anderen kritischen Gütern von entscheidender Bedeutung, da selbst kurzfristige Temperaturabweichungen zu einer Unbrauchbarkeit des Transportguts führen können.

Ein weiterer Vorteil der erfindungsgemäßen Ausbildung liegt in der Möglichkeit, die beiden Kühlsysteme in unterschiedlichen Betriebsarten zu betreiben. Bei moderaten Umgebungstemperaturen, die bei den meisten Transporten vorherrschen (typischerweise um 20°C), ist für die Kühlung im Bereich von 2-8°C in der Regel nur ein Kühlsystem erforderlich. Dieses kann dann kontinuierlich betrieben werden, ohne in einen taktenden Betrieb mit häufigen Ein- und Ausschaltvorgängen übergehen zu müssen. Im Gegensatz dazu müsste ein einzelnes, entsprechend dimensioniertes Kühlsystem bei solchen Bedingungen zwangsläufig takten, um eine Unterkühlung des Innenraums zu vermeiden. Durch die erfindungsgemäße Ausbildung mit zwei Kühlsystemen wird somit ein energieeffizienterer Betrieb ermöglicht, da die häufigen Ein- und Ausschaltvorgänge vermieden werden, die bei jedem Schaltvorgang zu Energieverlusten führen und die Gesamteffizienz des Systems reduzieren.

Wird der Transportbehälter extremen Umgebungsbedingungen ausgesetzt, beispielsweise sehr hohen Außentemperaturen, kann die Steuerung beide Kühlsysteme gleichzeitig aktivieren, um die maximale Kühlleistung zu erzielen. Diese Betriebsart ermöglicht es, auch bei anspruchsvollen Umgebungsbedingungen die erforderliche Temperatur im Innenraum aufrechtzuerhalten. Die Dimensionierung der einzelnen Kühlsysteme ist dabei so gewählt, dass bei den statistisch am häufigsten auftretenden Umgebungsbedingungen ein einzelnes Kühlsystem ausreicht, während extreme Bedingungen durch den gleichzeitigen Betrieb beider Systeme bewältigt werden können. Diese Auslegung stellt einen optimalen Kompromiss zwischen Energieeffizienz im Normalbetrieb und Leistungsfähigkeit unter extremen Bedingungen dar.

Die Vorteile der erfindungsgemäßen Ausbildung mit zwei Kühlsystemen sollen anhand eines konkreten Beispiels erläutert werden. Es wird ein typischer Transportfall betrachtet, bei dem die Umgebungstemperatur 20°C beträgt und im Innenraum eine Temperatur von 5°C aufrechterhalten werden soll. Bei diesem Szenario beträgt der erforderliche Kältebedarf beispielsweise 20 W. In der erfindungsgemäßen Ausführung mit zwei Kühlsystemen kann dieser Kältebedarf von einem einzelnen Kühlsystem im Dauerbetrieb gedeckt werden. Aufgrund der moderaten Kühlleistung kann das System mit optimalen Betriebsparametern arbeiten: Die Verdampfungstemperatur kann mit 4°C nahe an der Innenraumtemperatur gehalten werden, da für die Wärmeübertragung eine Temperaturdifferenz von nur 1 K ausreicht. Die bei der Kälteerzeugung entstehende Abwärme von etwa 24 W kann mit einer Temperaturdifferenz von nur 5 K abgeführt werden, sodass sich eine Kondensationstemperatur von 25°C ergibt. Unter diesen günstigen Bedingungen erreicht das Kühlsystem einen Leistungskoeffizienten (COP) von 5,4, was bedeutet, dass für die Erzeugung der 20 W Kälteleistung lediglich 4 W elektrische Leistung erforderlich sind.

Im Vergleich dazu müsste ein einzelnes Kühlsystem, das die gleiche Kühlaufgabe alleine bewältigen soll, für eine deutlich höhere Kälteleistung ausgelegt sein, beispielsweise die dreifache Leistung von 60 W, die dann nur ein Drittel der Zeit benötigt wird. Diese höhere Leistung erfordert jedoch ungünstigere Betriebsbedingungen: Die Verdampfungstemperatur muss auf 2°C abgesenkt werden, was einer um 3 K größeren Temperaturdifferenz entspricht. Gleichzeitig muss die Kondensationstemperatur aufgrund der höheren abzuführenden Wärmemenge um 15 K über der Umgebungstemperatur liegen. Diese größeren Temperaturdifferenzen führen zu einem deutlich schlechteren Leistungskoeffizienten von nur noch etwa 2,7, sodass für die 60 W Kälteleistung eine elektrische Leistung von 22 W erforderlich ist. Unter Berücksichtigung der kürzeren Laufzeit entspricht dies einem mittleren Energieverbrauch von 7,3 W. Die erfindungsgemäße Ausführung mit zwei Kühlsystemen, von denen eines im energieeffizienten Dauerbetrieb arbeitet, benötigt somit bei diesen typischen Betriebsbedingungen nur etwa die Hälfte der elektrischen Leistung (4 W gegenüber 7,3 W) im Vergleich zu einem einzelnen, größer dimensionierten Kühlsystem.

Eine vorteilhafte Ausbildung der Erfindung sieht vor, dass jedes der beiden Kühlsysteme einen Primärkreislauf mit einem Kältemittel umfasst, der als Kreislauf der jeweiligen Kompressionskältemaschine ausgebildet ist, und einen Sekundärkreislauf umfasst, der das Verteilsystem aufweist und mit einem flüssigen oder gasförmigen Kühlmedium befüllt ist, wobei der Primärkreislauf über einen Wärmetauscher thermisch mit dem Sekundärkreislauf gekoppelt ist, um das Kühlmedium zu kühlen. Diese Zweikreisausbildung jedes Kühlsystems kombiniert die Vorteile einer energieeffizienten Kompressionskältemaschine mit einem flüssigkeits- oder gasbasierten Verteilsystem für eine optimale Wärmeübertragung. Die Kompressionskältemaschine des Primärkreislaufs kann dabei in ihrem optimalen Betriebspunkt betrieben werden, da sie lediglich das Kühlmedium des Sekundärkreislaufs über einen Wärmetauscher kühlen muss, wodurch die Verdampfungs- und Kondensationstemperaturen so gewählt werden können, dass eine maximale Leistungszahl erreicht wird. Gleichzeitig ermöglicht die Verwendung eines flüssigen oder gasförmigen Kühlmediums im Sekundärkreislauf einen besonders effizienten Wärmeübergang zwischen dem Kühlmedium und der Umgebung, wie **z.B.** der Latentwärmespeicherschicht, da solche Medien im Vergleich zu Luft einen deutlich besseren Wärmeübergangskoeffizienten aufweisen, was zu einer gleichmäßigeren und effizienteren Kühlung der Umgebung wie **z.B.** der Latentwärmespeicherschicht führt. Ein weiterer Vorteil dieser Trennung in Primär- und Sekundärkreislauf ist die Möglichkeit, die Kältemittelmenge im Primärkreislauf zu minimieren, was besonders relevant bei der Verwendung nachhaltiger, jedoch brennbarer Kältemittel wie Propan (R290) oder Isobutan (R600a) mit niedrigem GWP-Wert (Global Warming Potential) ist, da für diese bei Lufttransporten strenge Mengenbeschränkungen gelten.

Eine weitere bevorzugte Ausführungsform der Erfindung sieht vor, dass der Primärkreislauf des ersten Kühlsystems mit dem Sekundärkreislauf des ersten Kühlsystems über einen ersten Wärmetauscher thermisch gekoppelt ist und der Primärkreislauf des zweiten Kühlsystems mit dem Sekundärkreislauf des zweiten Kühlsystems über einen zweiten Wärmetauscher thermisch gekoppelt ist. Diese getrennte Ausführung der beiden Kühlsysteme bietet den wesentlichen Vorteil einer vollständigen Redundanz, da jedes Kühlsystem autark betrieben werden kann und im Falle eines Ausfalls des anderen Systems die Kühlfunktion vollständig übernehmen kann. Die separate Ausführung der Wärmetauscher für jedes Kühlsystem verhindert zudem, dass sich Funktionsstörungen in einem System, wie beispielsweise Leckagen oder Verschmutzungen im Wärmetauscher, auf das jeweils andere System auswirken können. Darüber hinaus ermöglicht diese Entkopplung der Systeme eine differenzierte Regelungsstrategie, bei der die Steuerung für jedes Kühlsystem individuell die optimalen Betriebsparameter wie Verdampfungstemperatur, Kondensationstemperatur und Volumenstrom des Kühlmediums einstellen kann, um den jeweils aktuellen Kühlbedarf energieeffizient zu decken. Die vollständige thermische und funktionale Trennung der beiden Kühlsysteme erhöht nicht nur die Ausfallsicherheit erheblich, sondern gewährleistet auch, dass bei einem Defekt an einem der Systeme eine Wartung oder ein Austausch von Komponenten dieses Systems vorgenommen werden kann, ohne den Betrieb des anderen Systems zu beeinträchtigen, wodurch unter bestimmten Bedingungen sogar eine Wartung während des laufenden Transports ermöglicht wird.

Eine weitere vorteilhafte Ausführungsform der Erfindung sieht vor, dass der Primärkreislauf des ersten Kühlsystems über den ersten Wärmetauscher zusätzlich mit dem Sekundärkreislauf des zweiten Kühlsystems thermisch gekoppelt ist und der Primärkreislauf des zweiten Kühlsystems über den zweiten Wärmetauscher zusätzlich mit dem Sekundärkreislauf des ersten Kühlsystems thermisch gekoppelt ist. Diese kreuzweise thermische Kopplung der Primär- und Sekundärkreisläufe bietet eine übergreifende Redundanz, die über die reine Systemredundanz hinausgeht. Ein wesentlicher Vorteil dieser Ausbildung besteht darin, dass selbst bei einem Defekt in einem der Sekundärkreisläufe, beispielsweise durch eine Leckage oder Blockade im Verteilsystem, beide Kompressionskältemaschinen weiterhin über den jeweils intakten Sekundärkreislauf zur Kühlung beitragen können.

Umgekehrt kann bei einem Ausfall einer der Kompressionskältemaschinen die verbleibende funktionsfähige Kältemaschine beide Sekundärkreisläufe kühlen und somit die volle Kühlleistung über das gesamte Verteilsystem bereitstellen. Diese Anordnung maximiert die Verfügbarkeit des Kühlsystems unter nahezu allen Fehlerbedingungen und stellt sicher, dass die volle Flächenabdeckung des Verteilsystems auch bei Teilausfällen erhalten bleibt. Die kreuzweise Kopplung ermöglicht zudem eine hohe Flexibilität in der Regelungsstrategie, da die Steuerung gezielt entscheiden kann, welche Kombination aus Primär- und Sekundärkreisläufen für den aktuellen Kühlbedarf und die momentanen Umgebungsbedingungen die energieeffizienteste Lösung darstellt, wodurch sowohl die Betriebskosten als auch die Umweltbelastung minimiert werden.

Eine weitere vorteilhafte Ausführungsform der Erfindung sieht vor, dass die Steuerung eine erste Steuervorrichtung zur Ansteuerung des ersten Kühlsystems und eine zweite Steuervorrichtung zur Ansteuerung des zweiten Kühlsystems aufweist, wobei jede Steuervorrichtung mit einem eigenen Temperatursensor und gegebenenfalls einem eigenen Drucksensor zur Erfassung des Drucks im zugehörigen Primärkreislauf verbunden ist, sodass die jeweilige Kompressionskältemaschine in Abhängigkeit von Messdaten des Temperatur- und gegebenenfalls Drucksensors ansteuerbar ist. Diese separate Ausführung der Steuervorrichtungen mit jeweils eigenen Sensoren bietet eine vollständige Redundanz auf Steuerungsebene und verhindert, dass ein Ausfall einer Steuervorrichtung oder eines Sensors beide Kühlsysteme beeinträchtigt. Die autonome Arbeitsweise der Steuervorrichtungen, die nach der initialen Einstellung des Betriebspunkts unabhängig voneinander auf Basis ihrer jeweiligen Sensordaten agieren, stellt eine besonders hohe Betriebssicherheit dar, da die Systeme ohne externe Einflussnahme arbeiten und somit gegen Manipulationen oder Störungen von außen geschützt sind. Wenn beispielsweise das erste Kühlsystem die Temperatur im definierten Bereich nicht mehr halten kann, erkennt die zweite Steuervorrichtung anhand ihrer Sensordaten selbständig die Notwendigkeit einer Unterstützung und aktiviert das zweite Kühlsystem. Die Verwendung separater Sensoren für jede Steuervorrichtung gewährleistet zudem eine präzise Überwachung der Betriebsparameter der jeweiligen Kompressionskältemaschine, wodurch ein optimaler und energieeffizienter Betrieb jedes Kühlsystems ermöglicht wird. Die redundante Ausführung der Sensoren stellt darüber hinaus sicher, dass selbst bei einem Sensorausfall weiterhin zuverlässige Messdaten für die Steuerung zur Verfügung stehen, wodurch die Gefahr eines vollständigen Systemausfalls aufgrund fehlerhafter Sensordaten minimiert wird.

Eine besonders vorteilhafte Ausführungsform der Erfindung sieht vor, dass die Steuervorrichtung für das erste Kühlsystem und für das zweite Kühlsystem jeweils zumindest einen, insbesondere mehrere redundante, Temperatursensoren zur Erfassung der Vor- und Rücklauftemperatur des jeweiligen Sekundärkreislaufs umfasst. Bevorzugt weist jede Steuervorrichtung drei Temperatursensoren zur Erfassung der Vorlauftemperatur und drei Temperatursensoren zur Erfassung der Rücklauftemperatur auf. Diese dreifache Ausführung der Temperatursensoren ermöglicht eine zuverlässige Plausibilisierung der Messdaten, da bei einer Fehlmessung eines Sensors eindeutig identifiziert werden kann, welcher der Sensoren fehlerhaft arbeitet. Bei nur zwei Sensoren wäre im Falle abweichender Messwerte nicht feststellbar, welcher Sensor korrekte Werte liefert. Mit der dreifachen Ausführung kann durch Mehrheitsentscheid oder durch statistische Auswerteverfahren die Fehlmessung identifiziert und aussortiert werden, wodurch eine besonders hohe Betriebssicherheit erreicht wird.

Gemäß einer weiteren vorteilhaften Ausführungsform weist jede Steuervorrichtung zusätzlich wenigsten einen, insbesondere zwei Temperatursensoren zur Erfassung der Sauggastemperatur vor dem Kompressor der jeweiligen Kompressionskältemaschine und einen Temperatursensor zur Erfassung der Heißgastemperatur hinter dem Kompressor auf. Weiters kann jede Steuervorrichtung wenigstens eine, insbesondere zwei Drucksensoren zur Erfassung des Verdampfungsdrucks aufweisen. Eine derartige Sensorausstattung ermöglicht eine präzise Überwachung des thermodynamischen Zustands der Kompressionskältemaschine und erlaubt eine frühzeitige Erkennung von Störungen oder Abweichungen vom optimalen Betriebszustand. Die doppelte Ausführung der Sauggastemperatursensoren und der Drucksensoren gewährleistet auch hier eine erhöhte Ausfallsicherheit, wobei auf eine dreifache Ausführung verzichtet werden kann, da diese Parameter für den sicheren Betrieb als weniger kritisch eingestuft wurden.

Bevorzugt umfasst die Steuervorrichtung ferner wenigstens einen, insbesondere zwei Temperatursensoren zur Erfassung der Innenraumtemperatur des Transportbehälters sowie wenigstens einen Temperatursensor zur Erfassung der Umgebungstemperatur. Die vorzugsweise doppelte Ausführung der Innenraumsensoren dient der redundanten Überwachung der Temperatur im Innenraum, in dem das Transportgut aufgenommen ist, und gewährleistet eine zuverlässige Bestimmung der tatsächlichen Transportguttemperatur. Der Umgebungstemperatursensor liefert wichtige Informationen zur Optimierung des Betriebs der Kühlsysteme und zur Anpassung der Kühlleistung an die aktuellen Umgebungsbedingungen. Die Kombination dieser vielfältigen Sensordaten ermöglicht eine präzise Regelung der Kühlleistung unter Berücksichtigung aller relevanten Betriebsparameter und gewährleistet so einen energieeffizienten Betrieb der Kühlsysteme.

Eine besonders vorteilhafte Ausführungsform der Erfindung sieht vor, dass die Steuervorrichtung des ersten Kühlsystems mit mindestens einem Sensor zur Erfassung der Rücklauftemperatur des zweiten Kühlsystems, insbesondere des Sekundärkreislaufs des zweiten Kühlsystems, verbunden ist und umgekehrt die Steuervorrichtung des zweiten Kühlsystems mit mindestens einem Sensor zur Erfassung der Rücklauftemperatur des ersten Kühlsystems, insbesondere des Sekundärkreislaufs des ersten Kühlsystems, verbunden ist. Diese übergreifende Messdatenerfassung ermöglicht es den Steuervorrichtungen, den Betriebszustand des jeweils anderen Kühlsystems zu überwachen und bei Bedarf unterstützend einzugreifen. Wenn beispielsweise die Steuervorrichtung des zweiten Kühlsystems anhand der Rücklauftemperatur des ersten Kühlsystems feststellt, dass dieses nicht in der Lage ist, die erforderliche Kühlleistung zu erbringen, kann das zweite Kühlsystem automatisch aktiviert werden, um unterstützend einzugreifen. Dies gewährleistet, dass bei Bedarf immer die optimale Kühlleistung zur Verfügung steht, unabhängig davon, ob ein System ausfällt oder ob temporär ein erhöhter Kühlbedarf besteht.

Eine weitere vorteilhafte Ausführungsform der Erfindung sieht vor, dass die Steuervorrichtung des ersten Kühlsystems mit mindestens einem Sensor zur Erfassung der Kompressordrehzahl der Kompressionskältemaschine des zweiten Kühlsystems verbunden ist und umgekehrt die Steuervorrichtung des zweiten Kühlsystems mit mindestens einem Sensor zur Erfassung der Kompressordrehzahl der Kompressionskältemaschine des ersten Kühlsystems verbunden ist. Dies kann alternativ oder zusätzlich zur oben erwähnten Erfassung der Rücklauftemperatur erfolgen. Diese übergreifende Messdatenerfassung ermöglicht es den Steuervorrichtungen, den Betriebszustand des jeweils anderen Kühlsystems zu überwachen und bei Bedarf unterstützend einzugreifen. Wenn beispielsweise die Steuervorrichtung des zweiten Kühlsystems anhand der Kompressordrehzahl des ersten Kühlsystems feststellt, dass dieses nicht in der Lage ist, die erforderliche Kühlleistung zu erbringen, kann das zweite Kühlsystem automatisch aktiviert werden, um unterstützend einzugreifen. Das zweiet Kühlsystem kann hierbei insbesondere dann aktiviert werden, wenn das erste Kühlsystem eine vorgegebene Kompressordrehzahl, wie z.B. eine Drehzahl von 4000 U/min, überschreitet. Es wurde festgestellt, dass es ab einer bestimmten Drehzahl, welche einem gewissen Wärmeeintrag entspricht, effizienter ist, wenn beide Systeme parallel arbeiten. Dies ermöglicht es auch, eine Fehlfunktion eines Kühlsystems festzustellen, beispielsweise dadurch, dass die Kompressordrehzahl dieses Kühlsystems auf 0 U/min bleibt, obwohl gleichzeitig die Rücklauftemperatur dieses Kühlsystems steigt.

Bei einer bevorzugten Weiterbildung ist vorgesehen, dass eine übergeordnete Sekundärsteuerung vorgesehen ist, die vor Beginn einer Transportmission eines der beiden Kühlsysteme als führendes (Lead) System und das andere als Backup-System festlegt. Die Sekundärsteuerung aktiviert und weist diese Rollen zu, greift jedoch während des weiteren Betriebs bzw. Transports nicht mehr aktiv in die Steuerungsprozesse ein, sondern überwacht lediglich den Betrieb und zeichnet Daten auf. Diese Architektur mit autonomen Primärsteuerungen und einer passiven Überwachung durch die Sekundärsteuerung gewährleistet eine hohe Betriebssicherheit, da die aktive Steuerung vollständig auf die autonomen Steuervorrichtungen der beiden Kühlsysteme übertragen wird, die anhand der erfassten Sensor- und Betriebsdaten eigenständig entscheiden können, ob eine Aktivierung oder Anpassung der Kühlleistung erforderlich ist.

Eine weitere vorteilhafte Ausführungsform sieht vor, dass die autonomen Steuervorrichtungen der beiden Kühlsysteme zusätzlich Betriebsdaten wie die Kompressordrehzahl und/oder den Öffnungsgrad des elektronischen Expansionsventils (EEV) des Primärkreislaufs erfassen und analysieren. Diese Datenerfassung ermöglicht eine präzise Beurteilung des Betriebszustands der Kühlsysteme und erlaubt eine optimale Anpassung der Betriebsparameter an die aktuellen Anforderungen.

Unter einer thermischen Kopplung des Verteilsystems mit der Latentwärmespeicherschicht wird eine Verbindung zwischen dem Verteilsystem und der Latentwärmespeicherschicht verstanden, die einen Wärmeübergang mit einem thermischen Leitwert von mindestens 30 W/K, vorzugsweise mindestens 100 W/K, besonders bevorzugt mindestens 200 W/K ermöglicht. Der thermische Leitwert beschreibt dabei den Wärmeübergang zwischen dem Kühlmedium im Verteilsystem und dem Phasenwechselmaterial der Latentwärmespeicherschicht unter Berücksichtigung aller Zwischenschichten. Ein hoher thermischer Leitwert ist erforderlich, um die erforderliche Kühlleistung bei möglichst geringer Temperaturdifferenz zwischen dem Kühlmedium und dem Phasenwechselmaterial übertragen zu können.

Die thermische Kopplung des Verteilsystems mit der Latentwärmespeicherschicht gewährleistet auch bei einer nicht vollständigen Verteilung des Phasenwechselmaterials im Behälter eine effiziente Nutzung der Kühlkapazität. Durch den guten Wärmeübergang zwischen dem Kühlmedium und dem Phasenwechselmaterial kann die gespeicherte Kälte optimal im Behälter verteilt werden, was mit luftbasierten Systemen nicht in dieser Effizienz möglich war.

Eine besonders effiziente Ausführungsform der Erfindung sieht vor, dass der Sekundärkreislauf des ersten Kühlsystems und der Sekundärkreislauf des zweiten Kühlsystems in die Latentwärmespeicherschicht eingebettet sind. Diese Einbettung beider Sekundärkreisläufe direkt in die Latentwärmespeicherschicht gewährleistet einen optimalen Wärmeübergang zwischen den Kühlmedien und dem Phasenwechselmaterial, da die Verteilsysteme der Sekundärkreisläufe vollständig von dem Phasenwechselmaterial umgeben sind und somit eine maximale Kontaktfläche für den Wärmeaustausch zur Verfügung steht. Die parallele Anordnung der beiden Sekundärkreisläufe innerhalb der Latentwärmespeicherschicht stellt sicher, dass jedes PCM-Element von beiden Kühlsystemen erreicht und gekühlt werden kann, wodurch eine besonders gleichmäßige Temperaturverteilung im Phasenwechselmaterial erzielt wird. Dies ist insbesondere beim Einfrieren des Phasenwechselmaterials von Vorteil, da lokale Temperaturunterschiede vermieden werden und eine homogene Kristallisation erfolgen kann. Darüber hinaus ermöglicht diese Einbettung eine kompakte Bauweise, da keine zusätzlichen Wärmeübertragungsflächen oder -elemente zwischen den Sekundärkreisläufen und der Latentwärmespeicherschicht erforderlich sind. Die redundante Ausführung der in die Latentwärmespeicherschicht eingebetteten Sekundärkreisläufe gewährleistet zudem, dass selbst bei Ausfall eines Kreislaufs die vollständige thermische Ankopplung des verbleibenden Kreislaufs an die gesamte Latentwärmespeicherschicht erhalten bleibt, wodurch die Kühlleistung weiterhin gleichmäßig über das gesamte Volumen des Phasenwechselmaterials verteilt werden kann.

Eine alternative Ausführungsform sieht vor, dass der Sekundärkreislauf des ersten Kühlsystems und der Sekundärkreislauf des zweiten Kühlsystems an einer Oberfläche der Latentwärmespeicherschicht anliegen. Bei dieser Variante werden die Elemente des jeweiligen Sekundärkreislaufs flächig an der Latentwärmespeicherschicht befestigt, beispielsweise durch Aufkleben oder mechanische Verbindung. Diese Ausführung hat den Vorteil, dass die Latentwärmespeicherschicht als separate Einheit hergestellt werden kann und das Verteilsystem nachträglich angebracht werden kann. Um einen guten Wärmeübergang zu gewährleisten, ist bei dieser Ausführung vorzugsweise eine wärmeleitende Kontaktschicht zwischen dem Verteilsystem und der Latentwärmespeicherschicht vorgesehen.

Eine andere vorteilhafte Ausführungsform sieht vor, dass der Sekundärkreislauf des ersten Kühlsystems und der Sekundärkreislauf des zweiten Kühlsystems über Wärmeleitbleche mit der Latentwärmespeicherschicht thermisch gekoppelt sind. Die Wärmeleitbleche bestehen vorzugsweise aus einem Material mit hoher Wärmeleitfähigkeit, beispielsweise Aluminium oder Kupfer. Die Wärmeleitbleche können einerseits mit dem jeweiligen Sekundärkreislauf und andererseits mit der Latentwärmespeicherschicht in thermischem Kontakt stehen. Diese Ausführung ermöglicht eine besonders gleichmäßige Wärmeverteilung, da die Wärmeleitbleche die vom Sekundärkreislauf bereitgestellte Kälte großflächig in die Latentwärmespeicherschicht einleiten. Zudem können die Wärmeleitbleche so ausgeführt sein, dass sie eine zusätzliche mechanische Stabilisierung der Konstruktion bewirken.

Bei allen genannten Ausführungsformen ist es von Vorteil, wenn die thermische Kopplung zwischen dem Sekundärkeislauf und der Latentwärmespeicherschicht möglichst großflächig ausgeführt ist, um einen effizienten Wärmeübergang zu gewährleisten.

Gemäß einer bevorzugten Ausführungsform umfasst der Sekundärkreislauf des ersten Kühlsystems und der Sekundärkreislauf des zweiten Kühlsystems jeweils Kühlschlangen. Diese können als durchgehende, gebogene Rohre ausgebildet sein, die das flüssige Kühlmedium durch die Latentwärmespeicherschicht oder entlang deren Oberfläche führen. Kühlschlangen haben den Vorteil, dass sie eine einfache und robuste Konstruktion ermöglichen und aufgrund ihrer Flexibilität gut an unterschiedliche geometrische Anforderungen angepasst werden können. Die Kühlschlangen können beispielsweise aus Kupfer, Aluminium oder Edelstahl gefertigt sein und weisen vorzugsweise einen Innendurchmesser von 4 bis 12 mm auf, um einen optimalen Wärmeübergang bei vertretbarem Druckverlust zu gewährleisten.

Eine besonders vorteilhafte Ausführungsform der Erfindung sieht vor, dass die Kühlschlangen des Sekundärkreislaufs des ersten Kühlsystems und des Sekundärkreislaufs des zweiten Kühlsystems zueinander parallel verlaufen. Diese parallele Anordnung der Kühlschlangen ermöglicht eine optimale Abdeckung der Latentwärmespeicherschicht mit einer gleichmäßigen Verteilung der Kühlleistung, da beide Sekundärkreisläufe jeden Bereich des Phasenwechselmaterials gleichermaßen erreichen können. Die parallele Ausführung der Kühlschlangen stellt sicher, dass bei Ausfall eines Sekundärkreislaufs der jeweils andere Kreislauf weiterhin die gesamte Fläche der Latentwärmespeicherschicht mit seiner Kühlleistung versorgen kann, wodurch lokale Temperaturunterschiede oder unzureichend gekühlte Bereiche vermieden werden. Ein weiterer Vorteil dieser Anordnung liegt darin, dass die Strömungswiderstände in beiden Sekundärkreisläufen nahezu identisch sind, was zu einer gleichmäßigen Durchströmung mit dem jeweiligen Kühlmedium führt und somit einen optimalen Wärmeübergang gewährleistet. Die parallele Führung der Kühlschlangen ermöglicht zudem eine kompakte und fertigungstechnisch günstige Bauweise, da die Kühlschlangen in definierten Abständen zueinander angeordnet werden können und keine komplexen Kreuzungen oder Überlagerungen der Leitungsführungen erforderlich sind.

Eine besonders vorteilhafte Weiterbildung der Erfindung sieht vor, dass die Strömungsrichtung des Kühlmediums in den parallel zueinander verlaufenden Kühlschlangen entgegengesetzt ist. Diese gegenläufige Strömungsführung bewirkt eine gleichmäßigere Temperaturverteilung in der Latentwärmespeicherschicht, da die Bereiche mit der niedrigsten Kühlmediumtemperatur des einen Sekundkreislaufs den Bereichen mit der höchsten Kühlmediumtemperatur des anderen Sekundärkreislaufs gegenüberliegen. Dadurch werden lokale Temperaturunterschiede in der Latentwärmespeicherschicht minimiert und eine homogene Kühlung des Transportguts gewährleistet.

Gemäß einer weiteren Ausführungsform sind der Sekundärkreislauf des ersten Kühlsystems und der Sekundärkreislauf des zweiten Kühlsystems jeweils mäanderförmig ausgebildet. Diese Ausführung kombiniert die Vorteile einer einfachen Konstruktion mit einer guten Flächenabdeckung. Die Mäanderform ermöglicht es, mit einem durchgehenden Rohr oder Kanal eine große Fläche zu kühlen.

Gemäß einer besonders bevorzugten Ausführungsform ist das flüssige Kühlmedium des zweiten Kreislaufs als Wasser-Glykol-Gemisch ausgebildet. Wasser-Glykol-Gemische zeichnen sich durch eine hohe spezifische Wärmekapazität aus, wodurch bereits bei relativ geringen Durchflussmengen eine effektive Wärmeübertragung gewährleistet ist. Der Glykol-Anteil, vorzugsweise Ethylenglykol oder Propylenglykol, senkt den Gefrierpunkt des Gemisches und verhindert somit ein unerwünschtes Einfrieren des Kühlmediums auch bei niedrigen Temperaturen. Besonders bevorzugt wird ein Mischungsverhältnis von 60:40 bis 40:60 (Wasser:Glykol) verwendet, wodurch Gefrierpunkte von -25°C bis -45°C erreicht werden. Wasser-Glykol-Gemische weisen zudem eine moderate Viskosität auf, die auch bei tiefen Temperaturen einen vertretbaren Energieaufwand für die Umwälzung ermöglicht.

Eine weitere vorteilhafte Ausführungsform sieht vor, dass der Sekundärkreislauf des ersten Kühlsystems und der Sekundärkreislauf des zweiten Kühlsystems jeweils eine Pumpe zum Zirkulieren des flüssigen Kühlmediums aufweisen. Die Pumpe ist vorzugsweise als Zahnradpumpe ausgebildet und ermöglicht eine kontrollierte und kontinuierliche Umwälzung des Kühlmediums. Durch die Verwendung einer jeweiligen Pumpe kann die Strömungsgeschwindigkeit des Kühlmediums und damit die Kühlleistung gezielt eingestellt werden. Die Pumpe ist vorzugsweise drehzahlgeregelt ausgeführt, wodurch der Volumenstrom an den aktuellen Kühlbedarf angepasst werden kann. Dies ermöglicht einen energieeffizienten Betrieb des Systems. Um eine hohe Betriebssicherheit zu gewährleisten, ist die Pumpe vorzugsweise für den Dauerbetrieb ausgelegt und mit einem Trockenlaufschutz versehen.

Die mehrschichtige Hülle des Transportbehälters dient dazu, den Innenraum thermisch von der Umgebung zu isolieren und gleichzeitig eine aktive Temperierung des Innenraums zu ermöglichen. Der Schichtaufbau der Hülle ist dabei so gewählt, dass einerseits ein möglichst geringer Wärmeeintrag von außen erfolgt und andererseits eine effiziente und gleichmäßige Temperierung des Innenraums gewährleistet ist. Die einzelnen Schichten der Hülle erfüllen dabei unterschiedliche Funktionen und sind in ihrer Anordnung so optimiert, dass sie bestmöglich zusammenwirken.

Eine bevorzugte Ausführungsform sieht vor, dass die mehrschichtige Hülle von außen nach innen eine Dämmschicht und eine Latentwärmespeicherschicht aufweist. Diese Anordnung hat den Vorteil, dass die außen liegende Dämmschicht sowohl die Latentwärmespeicherschicht als auch den Innenraum wirksam gegen Wärmeeintrag von außen schützt. Die Dämmschicht ist vorzugsweise als Vakuumdämmung ausgebildet und weist einen Wärmedurchgangskoeffizienten von weniger als 0,1 W/(m² ·K), besonders bevorzugt weniger als 0,05 W/(m² ·K) auf. Die innen liegende Latentwärmespeicherschicht steht in direktem oder indirektem thermischen Kontakt mit dem Innenraum und sorgt für eine Pufferung von Temperaturschwankungen.

Eine besonders bevorzugte Ausführungsform sieht vor, dass die Dämmschicht wenigstens ein Vakuumisolationspaneel (VIP) aufweist. Ein Vakuumisolationspaneel besteht aus einem porösen Kernmaterial, das von einer gas- und dampfdichten Hülle umschlossen ist, wobei der Zwischenraum evakuiert ist. Als Kernmaterial wird vorzugsweise pyrogene Kieselsäure, auch bekannt als hochdisperse Kieselsäure oder pyrogenes Siliciumdioxid, verwendet, die eine offenporige Struktur mit Porengrößen im Nanometerbereich aufweist. Alternativ können auch andere mikroporöse Materialien wie Aerogele, Glasfasern oder offenzellige Polyurethanschäume verwendet werden. Die gasdichte Hülle besteht vorzugsweise aus einer mehrlagigen Hochbarrierefolie, die typischerweise einen mehrschichtigen Aufbau aus Kunststoff- und Metallfolien aufweist, beispielsweise eine Kombination aus Polyethylenterephthalat (PET) und Aluminiumfolie. Der Innendruck im evakuierten Paneel liegt vorzugsweise unter 1 mbar, besonders bevorzugt unter 0,1 mbar. Durch diese Konstruktion wird die Wärmeleitung durch das Gas im Kernmaterial nahezu vollständig unterbunden, wodurch Vakuumisolationspaneele einen sehr niedrigen Wärmedurchgangskoeffizienten von typischerweise weniger als 0,005 W/(m·K) aufweisen.

Die Pufferwirkung der Latentwärmespeicherschicht wird durch die Verwendung eines Phasenwechselmaterials (Phase Change Material, PCM) erreicht, das beim Übergang zwischen flüssiger und fester Phase eine große Menge an Wärmeenergie aufnehmen oder abgeben kann. Die beim Phasenübergang gespeicherte oder freigesetzte Energie wird als latente Wärme bezeichnet und ist in der Regel um ein Vielfaches größer als die sensible Wärme, die durch reine Temperaturänderung des Materials gespeichert werden kann.

Als Phasenwechselmaterialien kommen verschiedene Stoffklassen in Betracht. Organische PCMs wie Paraffine und Fettsäuren zeichnen sich durch eine gute chemische Stabilität und geringe Unterkühlungseffekte aus. Anorganische PCMs, insbesondere Salzhydrate und eutektische Salzgemische, weisen eine höhere volumetrische Speicherkapazität auf, neigen jedoch stärker zur Unterkühlung und Phasenseparation. Auch PCM-Compounds, bei denen das Phasenwechselmaterial in eine Polymermatrix eingebettet ist, können verwendet werden. Die Auswahl des geeigneten PCMs richtet sich dabei nach der gewünschten Phasenübergangstemperatur, der erforderlichen Speicherkapazität und den spezifischen Anforderungen an die mechanische und chemische Stabilität.

Eine besonders bevorzugte Ausführungsform sieht vor, dass die Latentwärmespeicherschicht ein Phasenwechselmaterial mit einem Phasenübergang im Temperaturbereich von 2°C bis 8°C umfasst. Dieser Temperaturbereich ist besonders für den Transport von Arzneimitteln und anderen kühlpflichtigen Produkten geeignet, die typischerweise bei 2°C bis 8°C gelagert werden müssen.

Bei Transportbehältern für temperaturempfindliches Transportgut stellt die ungleichmäßige Einwirkung von Wärmeenergie von außen eine besondere Herausforderung dar. Wird der Behälter beispielsweise direkter Sonneneinstrahlung ausgesetzt, so erfolgt der Wärmeeintrag hauptsächlich auf einer Seite des Behälters, während die anderen Seiten weniger stark erwärmt werden. Diese ungleichmäßige thermische Belastung kann zu lokalen Temperaturunterschieden im Innenraum führen und die Funktion der Latentwärmespeicherschicht beeinträchtigen. Besonders kritisch ist dies, wenn das Phasenwechselmaterial in den stärker erwärmten Bereichen bereits vollständig geschmolzen ist, während es in anderen Bereichen noch im festen Zustand vorliegt. Um solche lokalen Temperaturunterschiede zu vermeiden und eine möglichst gleichmäßige Temperaturverteilung im Innenraum zu gewährleisten, sind besondere Maßnahmen zur Verteilung der thermischen Energie in Umfangsrichtung des Behälters erforderlich.

Eine vorteilhafte Ausführungsform sieht in diesem Zusammenhang vor, dass die Hülle eine erste Energieverteilschicht aus einem wärmeleitenden Material aufweist, die zur gleichmäßigen Verteilung von von außen auf den Behälter einwirkender thermischer Energie dient. Diese erste Energieverteilschicht ist vorzugsweise außerhalb der Latentwärmespeicherschicht angeordnet und sorgt dafür, dass lokale Wärmeeinträge, wie sie beispielsweise durch Sonneneinstrahlung entstehen können, in Umfangsrichtung des Behälters verteilt werden. Dadurch wird verhindert, dass sich lokale Hotspots bilden, die zu einer ungleichmäßigen Belastung der Latentwärmespeicherschicht führen würden.

Eine weitere vorteilhafte Ausführungsform sieht vor, dass die Hülle eine dem Innenraum zugewandte zweite Energieverteilschicht aus einem wärmeleitenden Material aufweist. Diese zweite Energieverteilschicht dient dazu, die Temperatur an der Innenseite der Hülle zu homogenisieren und damit eine gleichmäßige Temperaturverteilung im Innenraum zu gewährleisten. Dies ist besonders wichtig, wenn die Latentwärmespeicherschicht nicht vollständig homogen arbeitet oder wenn das Transportgut ungleichmäßig im Innenraum verteilt ist.

Besonders vorteilhaft ist eine Ausführung, bei der die Latentwärmespeicherschicht zwischen der ersten und der zweiten Energieverteilschicht angeordnet ist. Durch diese Sandwich-Konstruktion wird sowohl der Wärmeeintrag von außen gleichmäßig verteilt als auch eine homogene Temperaturverteilung im Innenraum erreicht. Die beiden Energieverteilschichten wirken dabei wie thermische Ausgleichsschichten, die lokale Temperaturunterschiede ausgleichen und die Funktion der Latentwärmespeicherschicht optimieren.

Die Energieverteilschicht(en) weist bzw. weisen vorzugsweise eine Wärmeleitfähigkeit von λ > 100 W/(m·K), besonders bevorzugt λ > 200 W/(m·K) auf. Diese hohe Wärmeleitfähigkeit in der Schicht- bzw. Plattenebene ist erforderlich, um einen effektiven Temperaturausgleich in Umfangsrichtung zu gewährleisten. Als Material für die Energieverteilschicht(en) eignen sich beispielsweise Aluminium (λ ≈ 230 W/(m·K)) oder Kupfer (λ ≈ 380 W/(m·K)). Die Energieverteilschichten können als durchgehende Bleche oder als strukturierte Elemente, beispielsweise als Wärmeleitbleche mit integrierten Verstärkungsrippen, ausgebildet sein. Die Dicke der Energieverteilschicht(en) wird dabei so gewählt, dass einerseits eine ausreichende Wärmeleitung in Umfangsrichtung gewährleistet ist, andererseits aber das Gewicht des Transportbehälters nicht unnötig erhöht wird. Bevorzugte Dicken liegen im Bereich von 0,5 bis 5 mm.

Alternativ kann bzw. können die Energieverteilschicht(en) aus Graphit oder aus einem Graphit-Verbundwerkstoff bestehen, insbesondere aus Graphitplatten ausexpandiertem Graphit, welches z.B. auf die Aluminiumplatten aufgebracht, z.B. aufgeklebt ist. Solche Materialien führen auch zu einer mechanischen Verstärkung der Behälterwand bei geringem Gewicht.

Eine besonders vorteilhafte Ausführungsform sieht vor, dass die Energieverteilschichten benachbarter Wände des Behälters wärmeleitend miteinander verbunden sind. Hierzu können die Energieverteilschichten an den Kanten des Behälters beispielsweise durch Schweißen, Löten, Kleben oder mittels wärmeleitender Verbindungselemente miteinander verbunden sein. Diese durchgehende thermische Verbindung ermöglicht einen Wärmetransport nicht nur innerhalb einer Wand, sondern über den gesamten Behälterumfang hinweg. Die Verbindungsstellen sind dabei so ausgeführt, dass ihr thermischer Widerstand weniger als 0,01 (K·m²)/W, vorzugsweise weniger als 0,005 (K·m²)/W beträgt. Dies kann beispielsweise durch großflächige Überlappungen der zu verbindenden Energieverteilschichten oder durch zusätzliche Wärmeleitbleche im Eckbereich erreicht werden. Der thermische Widerstand der Verbindungsstelle sollte dabei nicht mehr als das 1,5-fache des Wärmeleitwiderstands einer gleich langen Strecke in der Energieverteilschicht selbst betragen.

Vorzugsweise umschließen die Dämmung, die Latentwärmespeicherschicht (falls vorhanden) und die erste und/oder zweite Energieverteilungsschicht den Innenraum allseitig, mit Ausnahme einer Zugangsöffnung, wie z.B. einer Tür. Die erste und/oder die zweite Energieverteilungsschicht umgibt den Innenraum vorzugsweise vollständig und ohne Unterbrechung mit Ausnahme der Öffnung, d.h. jede Wand der Hülle umfasst eine Energieverteilungsschicht, wobei die Energieverteilungsschichten aller Wände in den angrenzenden Kanten und Ecken wärmeleitend miteinander verbunden sind, d.h. durch eine Verbindung, die eine Wärmeleitfähigkeit von > 100 W/(m.K) aufweist.

Vorzugsweise besteht auch die Türeinrichtung aus dem Schichtaufbau, der für den Aufbau der Wände verwendet wird. Insbesondere besteht die Türeinrichtung aus einem Schichtaufbau, der von außen nach innen eine Dämmung, und eine Energieverteilungsschicht aus einem Material mit einer Wärmeleitfähigkeit von > 100 W/(m.K) umfasst.

Eine bevorzugte Ausführungsform sieht vor, dass die Latentwärmespeicherschicht in einem Deckenbereich und/oder einem Bodenbereich der Hülle angeordnet ist. Diese Anordnung nutzt den natürlichen Temperaturausgleich durch Konvektion im Innenraum des Behälters. Warme Luft steigt nach oben und wird dort von der Latentwärmespeicherschicht in der Decke gekühlt, während kalte Luft nach unten sinkt und dort gegebenenfalls von der Latentwärmespeicherschicht im Boden temperiert wird. Durch diese Positionierung kann die Menge des verwendeten Phasenwechselmaterials reduziert werden, da die Temperierung des Innenraums effizienter erfolgt als bei einer Anordnung der Latentwärmespeicherschicht in den Seitenwänden.

In einer besonders vorteilhaften Weiterbildung sind die Latentwärmespeicherschichten in Decke und Boden durch vertikale Energieverteilschichten in den Seitenwänden thermisch miteinander verbunden. Diese Energieverteilschichten mit einer Wärmeleitfähigkeit von vorzugsweise mehr als 200 W/(m·K) ermöglichen einen Wärmetransport zwischen den horizontalen Latentwärmespeicherschichten und sorgen so für einen thermischen Ausgleich.

Der Transportbehälter kann verschiedene geometrische Formen aufweisen, wobei die Hülle mehrere Wände aufweist, die in einem Winkel aneinander angrenzen. Vorzugsweise handelt es sich um einen quaderförmigen Container mit sechs Wänden, von denen die Wandstruktur fünf Wände bildet und die Türvorrichtung die sechste Wand bildet.

Der erfindungsgemäße Transportbehälter ist vorzugsweise als Luftfrachtbehälter ausgebildet und weist daher vorzugsweise Außenabmessungen von mindestens 0,4 x 0,4 x 0,4 m, vorzugsweise 0,4 x 0,4 x 0,4 m³ bis 3,0 x 2,5 x 1,8 m³, vorzugsweise 1,0 x 1,0 x 1,0 m³ bis 3,0 x 2,5 x 1,8 m³ auf.

Die Erfindung wird nachfolgende anhand von in der Zeichnung schematisch dargestellten Ausführungsformen näher dargestellt. In dieser zeigen
Fig. 1 eine schematische Darstellung eines Transportbehälters mit redundanten Kühlsystemen in einer Teilansicht;
Fig. 2 eine schematische Darstellung einer abgewandelten Ausführungsform des Transportbehälters mit redundanten Kühlsystemen;
Fig. 3 eine schematische Darstellung der redundanten Kühlsysteme, wobei die Primärkühlkreise jeweils nur mit einem Sekundärkühlkreis verbunden sind;
Fig. 4 eine schematische Darstellung der redundanten Kühlsysteme, wobei die Primärkühlkreise übergreifend mit beiden Sekundärkühlkreisen verbunden sind;
Fig. 5 eine schematische Darstellung einer Steuerung; und
Fig. 6 einen Schnitt durch einen erfindungsgemäßen Transportbehälter.

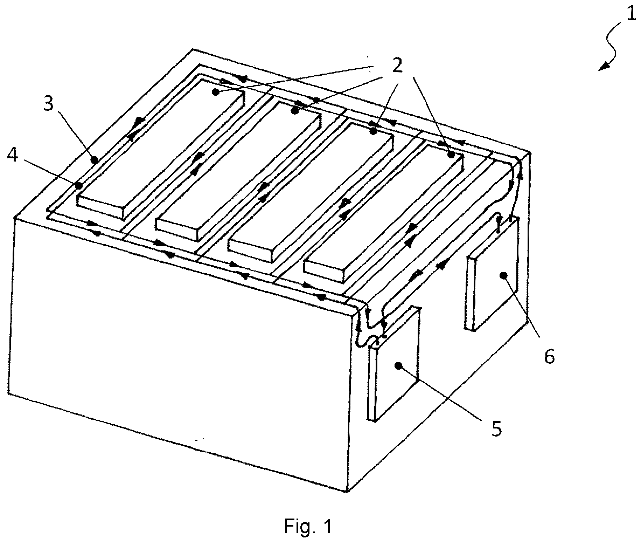

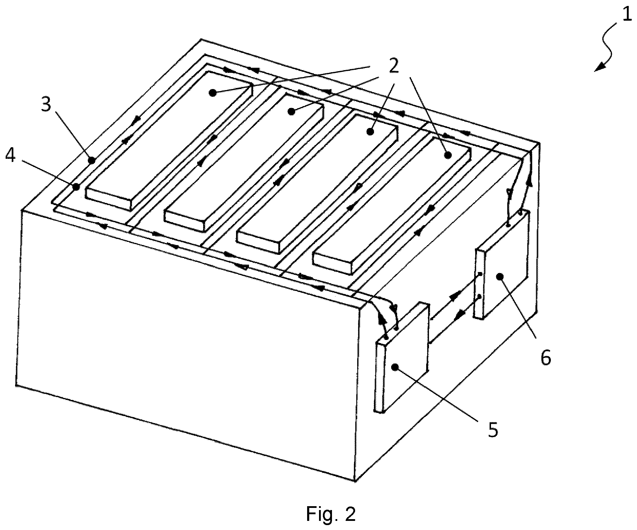

Die Fig. 1 und 2 zeigen schematisch einen Transportbehälter 1 zum Transport von temperaturempfindlichem Transportgut. Der Transportbehälter 1 weist einen Innenraum zur Aufnahme des Transportguts auf, der von einer mehrschichtigen Hülle umschlossen ist. Die mehrschichtige Hülle umfasst eine Wärmedämmung (nicht dargestellt) und eine Latentwärmespeicherschicht 1, die durch mehrere Latentwärmespeicherelemente in Form von PCM-Elementen gebildet wird. Mit der Latentwärmespeicherschicht 2 ist eine Kühlvorrichtung thermisch gekoppelt, die ein Verteilsystem für ein Kühlmedium aufweist. Die Kühlvorrichtung weist zwei Kühlsysteme auf, wobei jedes Kühlsystem thermisch mit der Latentwärmespeicherschicht 2 gekoppelt ist, sodass die Latentwärmespeicherschicht wahlweise entweder von dem ersten oder dem zweiten Kühlsystem kühlbar ist.

Jedes Kühlsystem umfasst einen Primärkreislauf und eine Sekundärkreislauf. Der Primärkreislauf des ersten Kühlsystems ist mit 5 bezeichnet und der Primärkreislauf des zweiten Kühlsystems ist mit 6 bezeichnet. Die Primärkreisläufe 5,6 ist jeweils als Kreislauf einer Kompressionskältemaschine ausgebildet ist, in dem ein Kältemittel zirkuliert. Der Primärkreislauf 5 des ersten Kühlsystems ist mit einem zugehörigen Sekundärkreislauf 4 thermisch gekoppelt und der Primärkreislauf 6 des zweiten Kühlsystems ist mit einem zugehörigen Sekundärkreislauf 3 thermisch gekoppelt. Der jeweilige Sekundärkreislauf 3,4 bildet das Verteilsystem zur Verteilung der Kälte und zur Einbringung der Kälte in die Latentwärmespeicherschicht aus und ist mit einem flüssigen Kühlmedium, vorzugsweise einem Wasser-Glykol-Gemisch, befüllt. Der erste Sekundärkreis 3 und der zweite Sekundärkreis 4 sind als Rohrleitungen ausgebildet, die mit den Latentwärmespeichern thermisch gekoppelt sind.

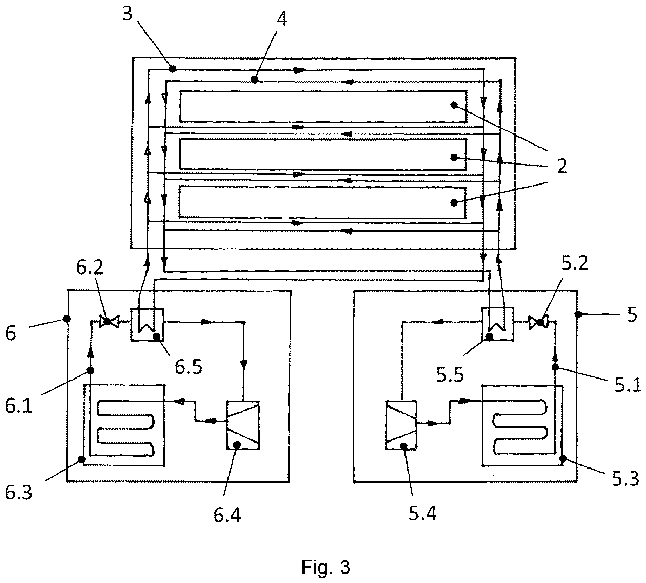

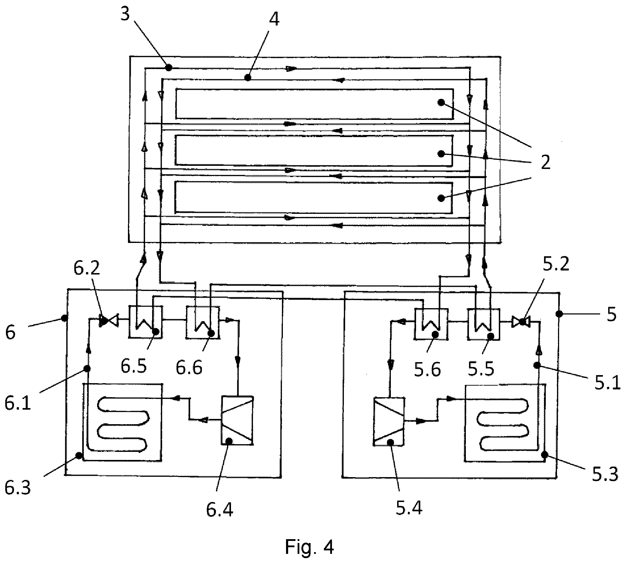

Die Fig. 1 und Fig. 2 zeigen zwei unterschiedliche Ausführungsformen der thermischen Kopplung zwischen den Primär- und Sekundärkreisläufen, wobei die thermische Kopplung bei der Ausführung gemäß Fig. 1 in Fig. 3 und die thermische Kopplung der Ausführung gemäß Fig. 2 in Fig. 4 dargestellt ist. In Fig. 1 und 3 ist eine Ausführung dargestellt, bei der der Primärkreislauf 5 des ersten Kühlsystems ausschließlich mit dem Sekundärkreislauf 4 des ersten Kühlsystems über einen ersten Wärmetauscher 5.5 thermisch gekoppelt ist und der Primärkreislauf 6 des zweiten Kühlsystems ausschließlich mit dem Sekundärkreislauf 3 des zweiten Kühlsystems über einen zweiten Wärmetauscher 6.5 thermisch gekoppelt ist.

Im Gegensatz dazu zeigen Fig. 2 und 4 eine Ausführung, bei der der Primärkreislauf 5 des ersten Kühlsystems über den ersten Wärmetauscher 5.5 mit dem Sekundärkreislauf 4 des ersten Kühlsystems und zusätzlich über einen dritten Wärmetauscher 5.6 mit dem Sekundärkreislauf 3 des zweiten Kühlsystems thermisch gekoppelt ist. Der Primärkreislauf 6 des zweiten Kühlsystems ist über den zweiten Wärmetauscher 6.5 mit dem Sekundärkreislauf 3 des zweiten Kühlsystems und zusätzlich über einen vierten Wärmetauscher 6.6 mit dem Sekundärkreislauf 4 des ersten Kühlsystems thermisch gekoppelt. Diese kreuzweise thermische Kopplung der Primär- und Sekundärkreisläufe bietet eine übergreifende Redundanz, die über die reine Systemredundanz hinausgeht.

Der erste Primärkreislauf 5 umfasst einen Kältemittelkreislauf 5.1, ein elektronisches Expansionsventil 5.2, einen Kondensator 5.3, einen Kompressor 5.4 und einen ersten und ggf. dritten Plattenverdampfer 5.5 bzw. 5.6, der als Wärmetauscher zur thermischen Kopplung mit dem Sekundärkreiskreislauf 4 bzw. 3 dient. Entsprechend umfasst der zweite Primärkreislauf 6 einen Kältemittelkreislauf 6.1, ein elektronisches Expansionsventil 6.2, einen Kondensator 6.3, einen Kompressor 6.4 und einen zweiten und ggf. vierten Plattenverdampfer 6.5 bzw. 6.6, der als Wärmetauscher zur thermischen Kopplung mit dem Sekundärkreislauf 3 bzw. 4 dient.

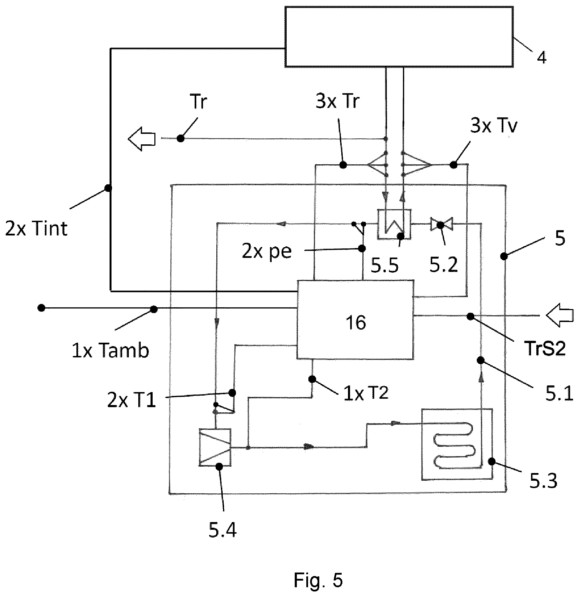

In Fig. 5 ist die Steuervorrichtung 16 des ersten Kühlsystems dargestellt. Die Steuervorrichtung 16 ist mit einer Vielzahl von Sensoren verbunden, um den Betriebszustand des Kühlsystems zu überwachen und bei Bedarf zu regeln. Der Sekundärkreislauf 4 weist drei Temperatursensoren zur Messung der Rücklauftemperatur Tr und drei Temperatursensoren zur Messung der Vorlauftemperatur Tv auf. Diese dreifache Ausführung der Temperatursensoren ermöglicht eine Plausibilisierung der Messwerte, sodass bei einer Fehlmessung eines Sensors dieser identifiziert und die Messung aussortiert werden kann. Weiterhin sind im Primärkreislauf 5 zwei Temperatursensoren in redundanter Ausführung zur Messung der Sauggastemperatur T1 vor dem Kompressor 5.4, ein Temperatursensor zur Messung der Heißgastemperatur T2 hinter dem Kompressor 5.4 sowie zwei Drucksensoren in redundanter Ausführung zur Messung des Verdampfungsdrucks pe angeordnet. Darüber hinaus sind ein Sensor zur Messung der Umgebungstemperatur Tamb und zwei Sensoren in redundanter Ausführung zur Messung der Innenraumtemperatur Tint des Transportbehälters vorgesehen. Die Steuervorrichtung 16 überwacht zudem die Rücklauftemperatur TrS2 des zweiten Sekundärkreislaufs 3, um bei Bedarf unterstützend einzugreifen. Analog ist ein zusätzlicher Sensor für die Erfassung der Rücklauftemperatur Tr des Sekundärkreislaufs 4 vorgesehen, dessen Messdaten der Steuereinrichtung des zweiten Primärkreislaufs 6 zugeführt sind.

Die entsprechende Steuervorrichtung des zweiten Kühlsystems ist analog ausgebildet.

Die Steuervorrichtungen der beiden Kühlsysteme arbeiten autonom und können anhand der erfassten Messdaten selbstständig entscheiden, ob eine Aktivierung des jeweiligen Kühlsystems erforderlich ist. Bei jeder Transportmission wird eines der beiden Primärkreisläufe als führendes (Lead) System und das andere als Backup-System festgelegt. Wenn das Backup-System anhand der übergreifenden Messung der Rücklauftemperatur Tr des Lead-Systems oder der Innenraumtemperatur Tint feststellt, dass das Lead-System den gewünschten Temperaturbereich nicht einhalten kann, aktiviert es sich automatisch, um zu unterstützen. Das Backup-System agiert dabei unabhängig davon, ob seine Unterstützung zur Leistungsteilung und Effizienzsteigerung oder als vollständiger Ersatz bei Ausfall des Lead-Systems benötigt wird.

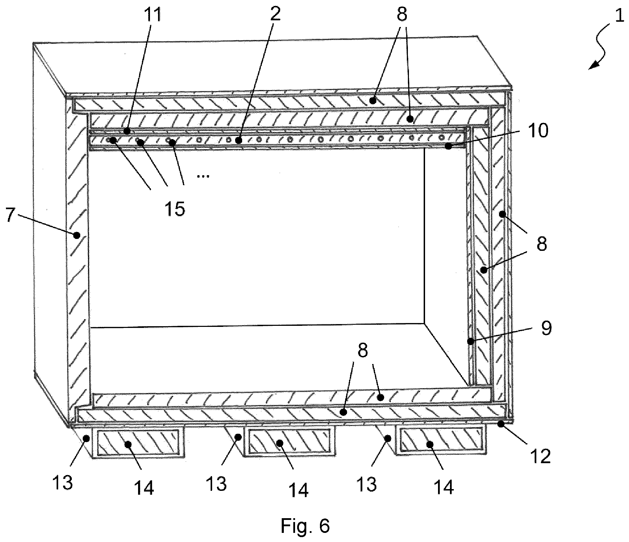

Fig. 6 zeigt einen Schnitt durch einen quaderförmig ausgebildeten Transportbehälter 1, der eine obere Wand, eine untere Wand (die den Boden bildet), eine Rückwand und zwei seitliche Wände aufweist. An der sechsten Seite ist ein Türelement 7 vorgesehen, mit dem eine Zugangsöffnung in den Innenraum verschlossen werden kann. Der Transportbehälter 1 weist eine mehrschichtige Hülle auf, die den Innenraum allseitig umschließt. Die Hülle umfasst eine zweischichtige Wärmedämmung 8 als äußere Dämmschicht, wobei wenigstens eine Schicht der mehrschichtigen Wärmedämmung 8 Vakuumisolationspaneele aufweisen kann oder von Vakuumisolationspaneelen gebildet ist. Die Hülle umfasst weiters wenigstens eine Latentwärmespeicherschicht 2, die ein Phasenwechselmaterial aufweist. Die Latentwärmespeicherschicht 2 ist im vorliegenden Ausführungsbeispiel lediglich in der oberen Wand vorgesehen, und zwar auf der dem Innenraum zugewandten Seite der Wärmedämmung 8.

An der Innenseite der Wärmedämmung 8 ist an der Rückwand und an den beiden Seitenwänden jeweils eine Wärmeverteilschicht 9 angeordnet. An der oberen Wand ist eine innere Wärmeverteilschicht 10 innerhalb der Latentwärmespeicherschicht 2 und eine äußere Wärmeverteilschicht 11 außerhalb der Latentwärmespeicherschicht 2 vorgesehen. Die Wärmeverteilschichten 9, 10 und 11 dienen der gleichmäßigen Temperaturverteilung im Transportbehälter 1.

Der Zugang zum Innenraum erfolgt über eine Türöffnung, die mit einem Türelement 7 verschlossen werden kann. Die Latentwärmespeicherschicht 2 ist mit durchströmten Kühlkanälen 15 der Sekundärkreisläufe 3,6 des ersten und des zweiten Kühlsystems ausgestattet. An der Unterseite des Transportbehälters 1 ist eine Bodenplatte 12 angeordnet, an der mehrere Containerfüße 13 befestigt sind. In die Containerfüße 13 sind Energiespeicher 14 integriert, welche die Kühlsysteme, insbesondere deren Pumpen und Kompressoren 5.4 und 6.4 mit elektrischer Energie versorgen.

## Patentansprüche

1. Transportbehälter zum Transport von temperaturempfindlichem Transportgut aufweisend
einen Innenraum zur Aufnahme des Transportguts,
eine den Innenraum umschließende mehrschichtige Hülle, die eine Wärmedämmung (8) und vorzugsweise wenigstens eine Latentwärmespeicherschicht (2) umfasst, und
eine Kühlvorrichtung zur Kühlung des Innenraums mit einem Verteilsystem für ein Kühlmedium, das vorzugswese mit der Latentwärmespeicherschicht (2) thermisch gekoppelt ist,
**dadurch gekennzeichnet,**
**dass** die Kühlvorrichtung zwei Kühlsysteme aufweist, nämlich ein erstes Kühlsystem und ein zweites Kühlsystem, wobei jedes Kühlsystem eine Kompressionskältemaschine aufweist und vorzugsweise thermisch mit der Latentwärmespeicherschicht (2) gekoppelt ist, sodass der Innenraum wahlweise entweder von dem ersten oder dem zweiten Kühlsystem kühlbar ist, und
**dass** eine Steuerung zur Ansteuerung der Kühlaggregate vorgesehen und dazu eingerichtet ist, bei maximaler Kühlanforderung beide Kühlsysteme gleichzeitig zu betreiben.

2. Transportbehälter nach Anspruch 1, **dadurch gekennzeichnet, dass** jedes Kühlsystem einen Primärkreislauf (5,6) mit einem Kältemittel umfasst, der als Kreislauf der jeweiligen Kompressionskältemaschine ausgebildet ist, und einen Sekundärkreislauf (3,6) umfasst, der das Verteilsystem aufweist und mit einem flüssigen oder gasförmigen Kühlmedium befüllt ist,
wobei der Primärkreislauf (5,6) über einen Wärmetauscher (5.5, 6.5) thermisch mit dem Sekundärkreislauf (3,6) gekoppelt ist, um das Kühlmedium zu kühlen.

3. Transportbehälter nach Anspruch 1 oder 2, **dadurch gekennzeichnet, dass** der Primärkreislauf (5) des ersten Kühlsystems mit dem Sekundärkreislauf (4) des ersten Kühlsystems über einen ersten Wärmetauscher (5.5) thermisch gekoppelt ist und der Primärkreislauf (6) des zweiten Kühlsystems mit dem Sekundärkreislauf (3) des zweiten Kühlsystems über einen zweiten Wärmetauscher (6.5) thermisch gekoppelt ist.

4. Transportbehälter nach Anspruch 1 oder 2, **dadurch gekennzeichnet, dass** der Primärkreislauf (5) des ersten Kühlsystems über den ersten Wärmetauscher (5.5) oder einen dritten Wärmetauscher (5.6) zusätzlich mit dem Sekundärkreislauf (3) des zweiten Kühlsystems thermisch gekoppelt ist und der Primärkreislauf (6) des zweiten Kühlsystems über den zweiten Wärmetauscher (6.5) oder einen vierten Wärmetauscher (6.6) zusätzlich mit dem Sekundärkreislauf (4) des ersten Kühlsystems thermisch gekoppelt ist.

5. Transportbehälter nach einem der Ansprüche 1 bis 4, **dadurch gekennzeichnet, dass** die Steuerung eine erste Steuervorrichtung (16) zur Ansteuerung des ersten Kühlsystems und eine zweite Steuervorrichtung zur Ansteuerung des zweiten Kühlsystems aufweist, wobei jede Steuervorrichtung (16) mit einem eigenen Temperatursensor und ggf. einem eigenen Drucksensor zur Erfassung des Drucks im zugehörigen Primärkreislauf verbunden ist, sodass die jeweilige Kompressionskältemaschine in Abhängigkeit von Messdaten des Temperatur- und ggf. Drucksensors ist.

6. Transportbehälter nach einem der Ansprüche 2 bis 5, **dadurch gekennzeichnet, dass** der Sekundärkreislauf (4) des ersten Kühlsystems und der Sekundärkreislauf (3) des zweiten Kühlsystems zumindest teilweise in die Latentwärmespeicherschicht (2) eingebettet sind.

7. Transportbehälter nach einem der Ansprüche 2 bis 5, **dadurch gekennzeichnet, dass** der Sekundärkreislauf (4) des ersten Kühlsystems und der Sekundärkreislauf (3) des zweiten Kühlsystems an einer Oberfläche der Latentwärmespeicherschicht (2) anliegen.

8. Transportbehälter nach einem der Ansprüche 2 bis 7, **dadurch gekennzeichnet, dass** der Sekundärkreislauf (4) des ersten Kühlsystems und der Sekundärkreislauf (3) des zweiten Kühlsystems jeweils Kühlschlangen (15) umfasst.

9. Transportbehälter nach Anspruch 8, **dadurch gekennzeichnet, dass** die Kühlschlangen (15) des Sekundärkreislaufs (4) des ersten Kühlsystems und des Sekundärkreislauf (3) des zweiten Kühlsystems zueinander parallel verlaufen.

10. Transportbehälter nach einem der Ansprüche 2 bis 9, **dadurch gekennzeichnet, dass** der Sekundärkreislauf (4) des ersten Kühlsystems und der Sekundärkreislauf (3) des zweiten Kühlsystems jeweils mäanderförmig ausgebildet sind.

11. Transportbehälter nach einem der Ansprüche 2 bis 10, **dadurch gekennzeichnet, dass** das flüssige Kühlmedium ein Wasser-Glykol-Gemisch ist.

12. Transportbehälter nach einem der Ansprüche 2 bis 11, **dadurch gekennzeichnet, dass** der Sekundärkreislauf (4) des ersten Kühlsystems und der Sekundärkreislauf (3) des zweiten Kühlsystems jeweils eine Pumpe zum Zirkulieren des flüssigen Kühlmediums aufweisen.

13. Transportbehälter nach einem der Ansprüche 1 bis 12, **dadurch gekennzeichnet, dass** die Latentwärmespeicherschicht (2) in einem Deckenbereich und/oder einem Bodenbereich der Hülle angeordnet ist.

14. Transportbehälter nach einem der Ansprüche 1 bis 13, **dadurch gekennzeichnet, dass** die Wärmedämmung (8) eine Vakuumdämmung umfasst.

15. Transportbehälter nach einem der Ansprüche 1 bis 14, **dadurch gekennzeichnet, dass** die Latentwärmespeicherschicht (2) ein Phasenwechselmaterial mit einem Phasenübergang im Temperaturbereich von 2°C bis 8°C umfasst.

16. Transportbehälter nach einem der Ansprüche 1 bis 15, **dadurch gekennzeichnet, dass** die Hülle eine erste Energieverteilschicht (9,11) aus einem wärmeleitenden Material zur gleichmäßigen Verteilung von von außen auf den Behälter (1) einwirkender thermischer Energie aufweist.

17. Transportbehälter nach einem der Ansprüche 1 bis 16, **dadurch gekennzeichnet, dass** die Hülle eine dem Innenraum zugewandte zweite Energieverteilschicht (10) aus einem wärmeleitenden Material aufweist.

18. Transportbehälter nach Anspruch 17, **dadurch gekennzeichnet, dass** die Latentwärmespeicherschicht (2) zwischen der ersten und der zweiten Energieverteilschicht (10,11) angeordnet ist.

19. Transportbehälter nach einem der Ansprüche 16 bis 18, **dadurch gekennzeichnet, dass** die Energieverteilschicht (9,10,11) eine Wärmeleitfähigkeit von λ > 100 W/(m·K) aufweist.
